# EUROPEAN PATENT APPLICATION

(11) **EP 4 468 427 A1**
(43) Date of publication of application: **27.11.2024**
(21) Application number: 22954399.6
(22) Date of filing: 10.08.2022
(51) Int. Cl.: H01M 10/04

(54) **POLE PIECE, ELECTRODE ASSEMBLY, BATTERY CELL, BATTERY, AND ELECTRICAL DEVICE**

(71) Applicant: Contemporary Amperex Technology (Hong Kong) Limited, Central, Central And Western District (HK)
(72) Inventor: XU, Hu, Ningde, Fujian 352100 (CN); JIN, Haizu, Ningde, Fujian 352100 (CN); ZENG, Yuqun, Ningde, Fujian 352100 (CN); ZHAO, Fenggang, Ningde, Fujian 352100 (CN); NIU, Shaojun, Ningde, Fujian 352100 (CN)
(74) Representative: Ran, Handong
(86) International application number: PCT/CN2022/111374
(87) International publication number: WO 2024/031423

(57) **Abstract**

Provided by some embodiments of the present application are a pole piece, an electrode assembly, a battery cell, a battery, and an electrical device. The pole piece comprises a current collector and an active substance layer coated on the surface of the current collector; the current collector comprises a coated region coated with the active substance layer and a tab region not coated with the active substance layer. The tab region is provided with a stress barrier structure spaced apart from the coated region, the stress barrier structure being used for reducing the stress transmitted to the junction of the tab region and the coated region when the tab region is deformed. According to some embodiments of the present application, the stress barrier structure is provided in the tab region, and the stress barrier structure and the tab region are arranged at intervals. Therefore, by reducing the stress transmitted to the junction between the tab region and the coated region when the tab region is deformed, the risk of cracking or wrinkling of the coated region in the current collector is reduced, and the risk of the active substance layer falling off from the coated region is reduced, thereby improving the product yield.

## Description

### Technical Field

The present application relates to the technical field of batteries, and more specifically, to an electrode plate, an electrode assembly, a battery cell, a battery, and an electrical apparatus.

### Background

Battery cells are widely used in electronic devices, such as mobile phones, laptop computers, battery vehicles, electric cars, electric airplanes, electric ships, electric toy cars, electric toy ships, electric toy airplanes, and electric tools.

In the battery technology, a tab in a battery cell needs to be flipped or flattened. In this process, an electrode plate is easily damaged, resulting in a decrease in the yield of the battery cell.

### Summary of the Invention

The present application provides an electrode plate, an electrode assembly, a battery cell, a battery, and an electrical apparatus, which can increase the production yield of a tab.

In a first aspect, some embodiments of the present application provide an electrode plate, including a current collector and an active material layer coated on the surface of the current collector. The current collector includes a coating region coated with the active material layer, and a tab region not coated with the active material layer. The tab region is provided with a stress barrier structure spaced apart from the coating region. The stress barrier structure is configured to reduce the stress transmitted to the junction of the tab region and the coating region when the tab region is deformed.

In the above technical solution, the stress barrier structure is disposed in the tab region, and the stress barrier structure is spaced apart from the coating region, thereby reducing the stress transmitted to the junction of the tab region and the coating region when the tab region is deformed, reducing the risk of cracking or wrinkling in the coating region in the current collector, reducing the risk of falling off of the active material layer on the coating region, and increasing the product yield.

In some embodiments, the stress barrier structure includes at least one of a groove and a score.

In the above technical solution, since the stress barrier structure includes at least one of the groove and the score, compared to other positions in the tab region, the position of the stress barrier structure is more prone to flipping. That is, there is a certain distance between the flipping position and the coating region, thereby reducing the impact of deformation of the tab region on the coating region.

In some embodiments, the current collector includes a first part and a second part located in the tab region and on both sides of the stress barrier structure in a first direction, the structural strength of the stress barrier structure is lower than the structural strength of at least one of the first part and the second part, and the tab region is located on one side of the coating region along the first direction.

In the above technical solution, since the structural strength of the stress barrier structure is lower than the structural strength of at least one of the first part and the second part, compared to the first part and the second part, the position of the stress barrier structure is more prone to flipping. That is, there is a certain distance between the flipping position and the coating region, thereby reducing the impact of deformation of the tab region on the coating region.

In some embodiments, the tab region has a first edge on the side away from the coating region, the first edge extends along a second direction, the first direction intersects with the second direction, and the stress barrier structure is disposed parallel to the first edge.

In the above technical solution, the stress barrier structure is disposed parallel to the first edge, so the stress barrier structure can better block the stress near the position of the first edge, thereby further reducing the impact of deformation of the tab region on the coating region, and increasing the product yield.

In some embodiments, the length of the stress barrier structure in the second direction is not less than the length of the first edge in the second direction.

In the above technical solution, the length of the stress barrier structure in the second direction is set to be not less than the length of the first edge in the second direction, thereby further increasing the blocking effect of the stress barrier structure on the stress near the position of the first edge, and further reducing the impact of deformation of the tab region on the coating region.

In some embodiments, the current collector includes a strengthening part, and the strengthening part is disposed in the tab region and located on the side of the stress barrier structure facing the coating region, where the structural strength of the strengthening part is not less than the structural strength of other positions in the tab region.

In the above technical solution, the strengthening part is located between the stress barrier structure and the coating region, and the structural strength of the strengthening part is not less than the structural strength of other positions in the tab region. As a result, in the process of transmitting the stress to the coating region, the stress barrier structure first achieves a blocking effect on the stress, and then, the strengthening part will further reduce the stress transmitted to the coating region, thereby achieving a dual blocking effect on the stress, and further reducing the risk of wrinkling or cracking in the coating region.

In some embodiments, the thickness of the strengthening part is greater than the thickness of other positions in the tab region, and/or the hardness of the strengthening part is greater than the hardness of other parts in the tab region.

In the above technical solution, by changing the thickness of the strengthening part or changing the hardness of the strengthening part, the strengthening part has higher structural strength, thereby better achieving the stress blocking effect. Moreover, compared with other methods, it is easier to implement and does not require too many complicated process links.

In some embodiments, the electrode plate further includes a strengthening layer, and the strengthening layer is an inactive material layer coated on the strengthening part.

In the above technical solution, similar to the strengthening part, the strengthening layer can also achieve stress absorbing and blocking effects, thereby further reducing the magnitude of the stress transmitted to the coating region, reducing the risk of wrinkling or cracking in the coating region, and increasing the product yield.

In some embodiments, the strengthening part is spaced apart from the stress barrier structure in the first direction.

In the above technical solution, by spacing the strengthening part apart from the stress barrier structure, the stress at the stress barrier structure is more difficult to be transmitted to the position of the strengthening part, so the stress is more difficult to be transmitted to the position of the coating region, so as to reduce the risk of wrinkling or cracking in the coating region.

In some embodiments, the length of the strengthening part in the first direction is L1, the minimum distance between the first edge and the strengthening part is L2, and L1 and L2 meet: L2 ≥ L1.

In the above technical solution, the length L1 of the strengthening part in the first direction is set to be not greater than the minimum distance L2 between the first edge and the strengthening part, thereby not only reducing the occurrence of wrinkling and cracking in the coating region, but also ensuring sufficient space in the tab region to achieve a deformation function to ensure the reliability of subsequent production and use of battery cells.

In some embodiments, the minimum distance between the strengthening part and the stress barrier structure in the first direction is L3, where L1 and L3 meet: L1 ≥ L3.

In the above technical solution, the minimum distance L3 between the strengthening part and the stress barrier structure in the first direction is set to be not greater than the length L1 of the strengthening part in the first direction, so more regions in the tab region can be used for forming the strengthening part, so as to further reduce the risk of wrinkling and cracking in the coating region.

In some embodiments, the current collector includes a plurality of tab parts disposed in the tab region, and the plurality of tab parts are disposed side by side along the second direction. A plurality of stress barrier structures are provided, and the plurality of stress barrier structures are respectively disposed on the plurality of tab parts.

In the above technical solution, the stress barrier structures are in one-to-one correspondence with the tab parts, so the plurality of stress barrier structures can achieve stress blocking effects on the plurality of tab parts, so as to reduce the magnitude of the stress transmitted to the coating region, and reduce the risk of wrinkling or cracking in the coating region.

In some embodiments, the tab part has a second edge and a third edge opposite to each other in the second direction, and the second edge is obliquely disposed relative to the first direction.

In the above technical solution, the second edge in the tab part is obliquely disposed, so the tab part can have a certain oblique trend. When the tab region is deformed, the tab part can be flipped along the extension direction of the second edge, thereby simplifying the flipping difficulty of the tab part.

In some embodiments, a first ray parallel to the first direction is formed in the direction from the tab region to the coating region, the first ray takes the end of the second edge away from the coating region as an end point, an included angle between the second edge and the first ray is α1, and α1 meets: -75° ≤ α1 ≤ 75°.

Here, assuming that the second edge is located within the 180° clockwise rotation range of the first ray, the included angle α1 between the second edge and the first ray is a positive included angle; and assuming that the second edge is located within the 180° counterclockwise rotation range of the first ray, the included angle α1 between the second edge and the first ray is a negative included angle.

In the above technical solution, the included angle between the second edge and the first direction is an inclination angle of the first edge, where the larger the inclination angle of the second edge, the larger the inclination angle of the tab part, and the lower the difficulty of flipping deformation of the tab part. If the inclination angle of the second edge is too large, the length of the tab part in the first direction will decrease accordingly, which will increase the difficulty of connecting the tab part after flipping with other components, and reduce the overcurrent area of the tab part. Therefore, in some embodiments of the present application, the included angle α1 between the first edge and the first direction is limited to -75° ≤ α1 ≤ 75°, so as to balance the flipping difficulty and overcurrent area of the tab part.

In some embodiments, the third edge is obliquely disposed relative to the first direction.

In the above technical solution, two edges along the second direction in the tab part are both obliquely disposed, so that when a plurality of electrode assemblies are integrated into a tab, the tab parts can be nested with each other to increase the overcurrent capacity.

In some embodiments, a first ray parallel to the first direction is formed in the direction from the tab region to the coating region, the first ray takes the end of the second edge away from the coating region as an end point, and an included angle between the second edge and the first ray is α1; and
a second ray parallel to the first direction is formed in the direction from the tab region to the coating region, the second ray takes the end of the third edge away from the coating region as an end point, an included angle between the third edge and the second ray is α2, and α1 and α2 meet α1 = α2.

In the above technical solution, the contour shape of the tab part is an isosceles trapezoid structure, and the isosceles trapezoid structure often implies stronger stability, so that the tab part can have higher structural strength, and the distance between adjacent tab parts can also be increased to facilitate the flipping of the tab part.

In some embodiments, α1 and α2 meet: α1 = α2.

In the above technical solution, the contour shape of the tab part is a parallelogram structure, and the second edge and the third edge have the same inclination direction, so that the entire tab part has the trend to incline to the same direction. As a result, in the flipping process, a plurality of tab parts can be flattened according to the same direction, thereby reducing the possibility of wrinkling caused by multi-direction flattening.

In some embodiments, the minimum distance between adjacent tab parts in the second direction is D 1, and D1 meets: 0 ≤ D1 ≤ 1000 mm.

In the above technical solution, the minimum distance D1 between adjacent tab parts is set to be 0 ≤ D1 ≤ 1000 mm, and the minimum distance between adjacent tab parts is increased as much as possible on the premise of ensuring the overcurrent efficiency of the tab part to reduce the overall weight of the electrode plate.

In some embodiments, any of the tab parts does not exceed the coating region in the second direction.

In the above technical solution, by setting the tab part to not exceed the coating region in the second direction, in the winding process, the risk of the tab part exceeding a winding structure can be reduced, and the structural reliability can be increased.

In a second aspect, some embodiments of the present application provide an electrode assembly, including a first electrode plate and a second electrode plate with opposite polarities. The first electrode plate and/or the second electrode plate are the electrode plate according to any of the above embodiments.

In some embodiments, both the first electrode plate and the second electrode plate are the electrode plate according to any of the above embodiments, the first electrode plate is an anode electrode plate, and the second electrode plate is a cathode electrode plate, where the L3 corresponding to the second electrode plate is not less than the L3 corresponding to the first electrode plate.

In the above technical solution, the L3 of the second electrode plate is set to be not less than the L3 of the first electrode plate, that is, the size of the strengthening part in the second electrode plate can be larger than the size of the strengthening part in the first electrode plate, so that the strengthening part in the second electrode plate can not only reduce the magnitude of the stress on the coating region in the second electrode plate, but also achieve protecting and fixing effects on the strengthening part in the first electrode plate to increase the overall reliability of the electrode assembly.

In a third aspect, some embodiments of the present application provide a battery cell, including a shell and an electrode assembly according to any of the above embodiments, and the electrode assembly is disposed in the shell.

In some embodiments, the battery cell is cylindrical, the current collector includes a strengthening part, and the strengthening part is disposed in the tab region and located on the side of the stress barrier structure facing the coating region. The tab region has a first edge on the side away from the coating region, the minimum distance between the first edge and the strengthening part is L2, the diameter of the battery cell is L4, and L2 and L4 meet: L2 ≤ 2*L4.

In the above technical solution, according to the size of the battery cell, the L2 is set to be not greater than 2L4 to meet the production need of the battery cell.

In a fourth aspect, some embodiments of the present application provide a battery, including the battery cell according to any of the embodiments in the third aspect.

In a fifth aspect, some embodiments of the present application provide an electrical apparatus, including the battery cell according to any of the embodiments in the third aspect, and the battery cell is configured to provide electric energy.

### Description of Drawings

In order to illustrate the technical solutions in some embodiments of the present application more clearly, the drawings required in some embodiments of the present application will be briefly introduced below. Obviously, the drawings described below are only some embodiments of the present application. For those of ordinary skill in the art, other drawings can also be obtained according to these drawings without any creative effort.
FIG. 1 is a schematic structural view of a vehicle provided in some embodiments of the present application;
FIG. 2 is a schematic exploded view of a battery provided in some embodiments of the present application;
FIG. 3 is a schematic structural view of a battery module shown in FIG. 2;
FIG. 4 is a schematic exploded view of a battery cell provided in some embodiments of the present application;
FIG. 5 is a schematic structural view of an electrode plate provided in some embodiments of the present application;
FIG. 6 is a schematic view of a cross-sectional structure taken along a direction A-A in FIG. 5;
FIG. 7 is a schematic structural view of a tab region of an electrode plate provided in some embodiments of the present application;
FIG. 8 is a schematic structural view of a tab region of an electrode plate provided in some embodiments of the present application;
FIG. 9 is a schematic view of a cross-sectional structure taken along a direction B-B in FIG. 8;
FIG. 10 is a schematic view of an enlarged structure of a region Q in FIG. 8;
FIG. 11 is a schematic structural view of an electrode plate provided in some other embodiments of the present application;
FIG. 12 is a schematic structural view of an electrode plate provided in still some other embodiments of the present application;
FIG. 13 is a schematic view of an enlarged structure of a region P in FIG. 12;
FIG. 14 is a schematic view of an enlarged structure of a region O in FIG. 12;
FIG. 15 is a schematic structural view of an electrode assembly provided in some embodiments of the present application.

In the drawings, the drawings are not drawn according to an actual scale.

### Description of reference numerals:

1000-Vehicle;-vehicle; 2000-battery; 2010-box body; 2011-first box part; 2012-second box part; 2013-accommodating part; 3000-controller; 4000-motor; 5000-battery module;
1-battery cell; 11-shell; 111-case; 112-end cover; 12-electrode assembly;
10-electrode plate;
100-current collector; 110-coating region; 120-tab region; 121-tab part; 122-stress barrier structure; 123-strengthening part;
200-active material layer;
300-strengthening layer;
400-first electrode plate;
500-second electrode plate;
E1-first edge; E2-second edge; E3-third edge;
Z1-first ray; Z2-second ray;
X-first direction; Y-second direction.

### Detailed Description

In order to make the objectives, technical solutions and advantages of some embodiments of the present application clearer, the technical solutions in some embodiments of the present application will be clearly described below in conjunction with the drawings in some embodiments of the present application. It is apparent that the described embodiments are a part of the embodiments of the present application rather than all the embodiments. All other embodiments obtained by those of ordinary skill in the art based on the embodiments in the present application without creative effort shall fall within the protection scope of the present application.

Unless otherwise defined, all technical and scientific terms used in the present application have the same meanings as commonly understood by those skilled in the art of the present application. The terms used in the specification of the present application are only for the purpose of describing specific embodiments, but are not intended to limit the present application. The terms "including" and "having" and any variants thereof in the specification and claims of the present application and in the description of the above drawings are intended to cover non-exclusive inclusion. The terms "first", "second", and the like in the specification and claims of the present application or the above drawings are used for distinguishing different objects, rather than used for describing a specific order or primary and secondary relationship.

The reference to "embodiments" in the present application means that specific features, structures or characteristics described in conjunction with embodiments may be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that unless otherwise clearly specified and defined, the terms "installation", "connected", "connection" and "attachment" should be broadly understood. For example, the connection may be fixed connection, detachable connection or integrated connection, or may be direct connection, indirect connection through an intermediate, or internal communication of two components. Those of ordinary skill in the art can understand the specific meanings of the above terms in the present application according to specific situations.

In the present application, the term "and/or" only describes the association relationship between associated objects, indicating that there may be three relationships. For example, A and/or B may indicate that there are three situations: A exists alone, A and B exist simultaneously, and B exists alone. In addition, the character "/" in the present application generally means that the associated objects before and after it are in an "or" relationship.

In the embodiments of the present application, the same reference numerals represent the same components. Moreover, for simplicity, in different embodiments, detailed descriptions of the same components are omitted. It should be understood that the thicknesses, lengths, widths and other sizes of various components in some embodiments of the present application shown in the drawings, as well as the overall thickness, length, width and other sizes of an integrated apparatus are only illustrative and should not constitute any restrictions on the present application.

The term "a plurality of" in the present application refers to two or more (including two).

In the present application, the battery cell may include a lithium-ion secondary battery cell, a lithium-ion primary battery cell, a lithium-sulfur battery cell, a sodium/lithium-ion battery cell, a sodium-ion battery cell, a magnesium-ion battery cell, or the like, which is not limited in some embodiments of the present application. The battery cell may be cylindrical, flat, rectangular, or in other shapes, which is also not limited in some embodiments of the present application.

The battery cell includes an electrode assembly and an electrolyte. The electrode assembly includes a positive electrode plate, a negative electrode plate, and a spacer. The battery cell operates mainly relying on the movement of metal ions between the positive electrode plate and the negative electrode plate. The positive electrode plate includes a positive electrode current collector and a positive electrode active material layer. The positive electrode active material layer is coated on the surface of the positive electrode current collector. The positive electrode current collector includes a positive electrode coating region and a positive tab connected to the positive electrode coating region. The positive electrode coating region is coated with the positive electrode active material layer, and the positive tab is not coated with the positive electrode active material layer. Taking a lithium-ion battery cell as an example, the material of the positive electrode current collector may be aluminum, the positive electrode active material layer includes a positive electrode active material, and the positive electrode active material may be lithium cobalt oxide, lithium iron phosphate, ternary lithium, lithium manganate, or the like. The negative electrode plate includes a negative electrode current collector and a negative electrode active material layer. The negative electrode active material layer is coated on the surface of the negative electrode current collector. The negative electrode current collector includes a negative electrode coating region and a negative tab connected to the negative electrode coating region. The negative electrode coating region is coated with the negative electrode active material layer, and the negative tab is not coated with the negative electrode active material layer. The material of the negative electrode current collector may be copper, the negative electrode active material layer includes a negative electrode active material, and the negative electrode active material may be carbon, silicon, or the like. The material of the spacer may be polypropylene (PP), polyethylene (PE), or the like.

In related technologies, an electrode plate is wound to form an electrode assembly. A battery formed by the winding type electrode assembly has the advantages of low internal resistance and high energy density. After the production of the electrode plate is completed, one end of the electrode plate usually retains a tab region not coated with an active material layer. The tab region is subjected to flattening, flipping or other shaping processes to form a tab, and the tab is configured to be electrically connected to an electrode terminal of a battery cell to output the electric energy of the electrode assembly.

The inventors noticed that in the deformation process of the tab, the region coated with the active material layer in the electrode plate is prone to damage, resulting in a decrease in product yield.

Through research, the inventors found that the tab is usually connected directly to the region coated with the active material layer in the electrode plate. As a result, in the flipping deformation process of the tab, the force on the tab will be transmitted to the region coated with the active material layer in the electrode plate, which may cause the problem of wrinkling, cracking, or falling off of the active material layer in the region coated with the active material layer on the current collector, affecting the product yield.

In view of this, some embodiments of the present application provide an electrode plate. The electrode plate includes: a current collector and an active material layer coated on the surface of the current collector. The current collector includes a coating region coated with the active material layer, and a tab region not coated with the active material layer. The tab region is provided with a stress barrier structure spaced apart from the coating region. The stress barrier structure is configured to reduce the stress transmitted to the junction of the tab region and the coating region when the tab region is deformed.

In some embodiments of the present application, the stress barrier structure is disposed in the tab region, and the stress barrier structure is spaced apart from the coating region, thereby reducing the stress transmitted to the junction of the tab region and the coating region when the tab region is deformed, reducing the risk of cracking or wrinkling in the coating region in the current collector, reducing the risk of falling off of the active material layer on the coating region, and increasing the product yield.

The technical solutions described in some embodiments of the present application are applicable to batteries and electrical apparatuses using batteries.

The electrical apparatus may be a vehicle, a mobile phone, a portable device, a laptop computer, a ship, a spacecraft, an electric toy, an electric tool, or the like. The vehicle may be a fuel vehicle, a gas vehicle, or a new energy vehicle. The new energy vehicle may be an all-electric vehicle, a hybrid electric vehicle, an extended-range electric vehicle, or the like. The spacecraft includes airplanes, rockets, space shuttles, spaceships, and the like. The electric toy includes fixed or mobile electric toys, such as game consoles, electric car toys, electric ship toys and electric airplane toys. The electric tool includes metal cutting electric tools, grinding electric tools, assembly electric tools and railway electric tools, such as electric drills, electric grinders, electric wrenches, electric screwdrivers, electric hammers, electric impact drills, concrete vibrators and electric planers. The above electrical apparatus is not specially limited in some embodiments of the present application.

In the following embodiments, for the convenience of description, a vehicle is taken as the electrical apparatus for description.

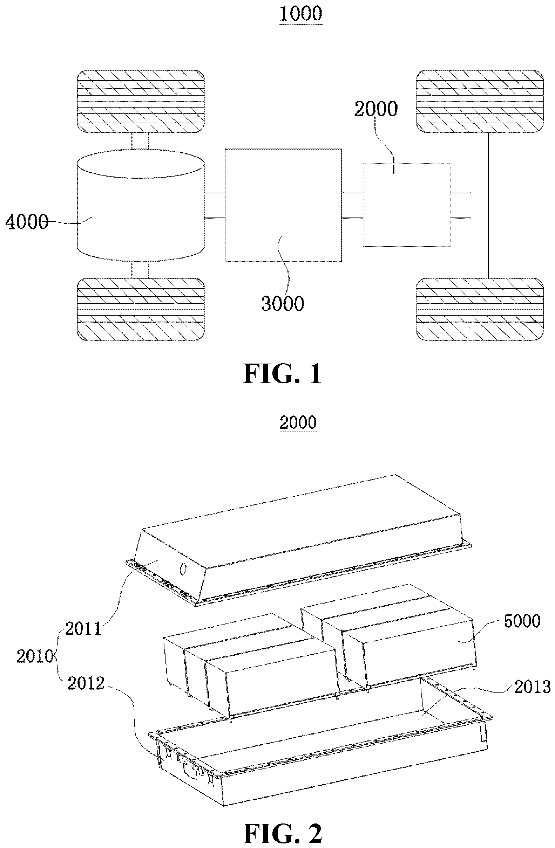

FIG. 1 is a schematic structural view of a vehicle provided in some embodiments of the present application.

As shown in FIG. 1, a battery 2000 is disposed inside a vehicle 1000, and the battery 2000 may be disposed at the bottom, head or tail of the vehicle 1000. The battery 2000 may be configured to supply power to the vehicle 1000. For example, the battery 2000 may be used as an operational power supply of the vehicle 1000.

The vehicle 1000 may further include a controller 3000 and a motor 4000. The controller 3000 is configured to control the battery 2000 to supply power to the motor 4000, for example, to meet the working power demand for starting, navigation and driving of the vehicle 1000.

In some embodiments of the present application, the battery 2000 can be not only used as an operational power supply of the vehicle 1000, but also used as a driving power supply of the vehicle 1000, so as to replace or partially replace fuel or natural gas to provide driving power for the vehicle 1000.

FIG. 2 is a schematic exploded view of a battery provided in some embodiments of the present application.

As shown in FIG. 2, the battery 2000 includes a box body 2010 and a battery cell (not shown in the figure), and the battery cell is accommodated in the box body 2010.

The box body 2010 is configured to accommodate the battery cell, and the box body 2010 may be of various structures. In some embodiments, the box body 2010 may include a first box part 2011 and a second box part 2012, the first box part 2011 and the second box part 2012 are covered to each other, and the first box part 2011 and the second box part 2012 together define an accommodating part 2013 for accommodating the battery cell. The second box part 2012 may be of a hollow structure with an opening at one end, the first box part 2011 is of a plate-like structure, and the first box part 2011 covers the opening side of the second box part 2012 to form a box body 2010 with an accommodating part 2013. Both the first box part 2011 and the second box part 2012 may also be of a hollow structure with an opening on one side, and the opening side of the first box part 2011 covers the opening side of the second box part 2012 to form a box body 2010 with an accommodating part 2013. Of course, the first box part 2011 and the second box part 2012 may be in various shapes, such as a cylinder and a cuboid.

In order to increase the sealing performance after connection between the first box part 2011 and the second box part 2012, a sealing member, such as a sealant, a sealing ring, or the like, may also be disposed between the first box part 2011 and the second box part 2012.

Assuming that the first box part 2011 covers the top of the second box part 2012, the first box part 2011 can also be referred to as an upper box cover, and the second box part 2012 can also be referred to as a lower box.

There may be one or a plurality of battery cells in the battery 2000. If there are a plurality of battery cells, the plurality of battery cells may be connected in series or parallel or series-parallel connection, where the series-parallel connection means that the plurality of battery cells are connected in both series and parallel. A plurality of battery cells may be directly connected in series or parallel or series and parallel together, and then, the whole formed by the plurality of battery cells is accommodated in the box body 2010. Of course, a plurality of battery cells may be connected in series or parallel or series and parallel first to form a battery module 5000, and then, a plurality of battery modules are connected in series or parallel or series and parallel to form a whole which is accommodated in the box body 2010.

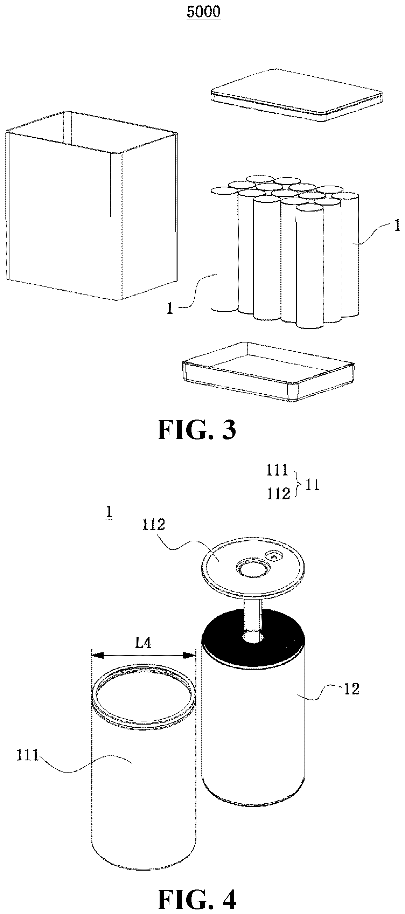

FIG. 3 is a schematic structural view of a battery module shown in FIG. 2. As shown in FIG. 3, in some embodiments, there are a plurality of battery cells 1, and the plurality of battery cells 1 are connected in series or parallel or series and parallel first to form a battery module 5000. Then, a plurality of battery modules 5000 are connected in series or parallel or series and parallel to form a whole which is accommodated in the box body 2010.

The plurality of battery cells 1 in the battery module may be electrically connected through a bus component, so as to realize parallel connection or series connection or series-parallel connection of the plurality of battery cells 1 in the battery module.

FIG. 4 is a schematic view of an exploded structure of a battery cell 1 provided in some embodiments of the present application. As shown in FIG. 4, the battery cell 1 includes a shell 11 and an electrode assembly 12, and the electrode assembly 12 is accommodated in the shell 11.

The electrode assembly 12 is a core component of the battery cell 1 to achieve charging and discharging functions, and includes a positive electrode plate, a negative electrode plate, and a spacer. The positive electrode plate and the negative electrode plate have opposite polarities. The spacer is used for insulated isolation between the positive electrode plate and the negative electrode plate. The electrode assembly 12 operates mainly relying on the movement of metal ions between the positive electrode plate and the negative electrode plate.

The shell 11 is of a hollow structure in which an accommodating cavity for accommodating the electrode assembly 12 and the electrolyte is formed. The shell 11 may be in various shapes, such as a cylinder and a cuboid. The shape of the shell 11 may be determined according to the specific shape of the electrode assembly 12. For example, if the electrode assembly 12 is of a cylinder structure, a cylinder shell may be selected; and if the electrode assembly 12 is of a cuboid structure, a cuboid shell may be selected.

In some embodiments, the shell 11 includes a case 111 and an end cover 112.

The end cover 112 is in sealed connection with the case 111 to form a sealing space for accommodating the electrode assembly 12 and the electrolyte. In some examples, one end of the case 111 has an opening, and one end cover 112 is provided and covers the opening of the case 111. In some other examples, both opposite ends of the case 111 have openings, and two end covers 112 are provided and respectively cover the two openings of the case 111.

Without limitation, the shape of the end cover 112 may be adapted to the shape of the case 111 to fit the case 111. Optionally, the end cover 112 may be made of a material with certain hardness and strength (such as aluminum alloy). In this way, the end cover 112 is less prone to deformation during extrusion and collision, so the battery cell 1 can have higher structural strength and increased safety performance.

The case 111 may be in various shapes and sizes, such as a cuboid, a cylinder and a hexagonal prism. Specifically, the shape of the case 111 may be determined according to the specific shape and size of the electrode assembly 12. The case 111 may be made of various materials, such as copper, iron, aluminum, stainless steel and aluminum alloy, which is not specially limited in some embodiments of the present application.

In some embodiments, a functional component, such as an electrode terminal, may be disposed on the end cover 112. The electrode terminal may be electrically connected to the electrode assembly 12 to output or input the electric energy of the battery cell 1.

The specific structure of the electrode plate 10 is described in detail below with reference to the drawings. The electrode plate 10 may be a positive electrode plate or a negative electrode plate.

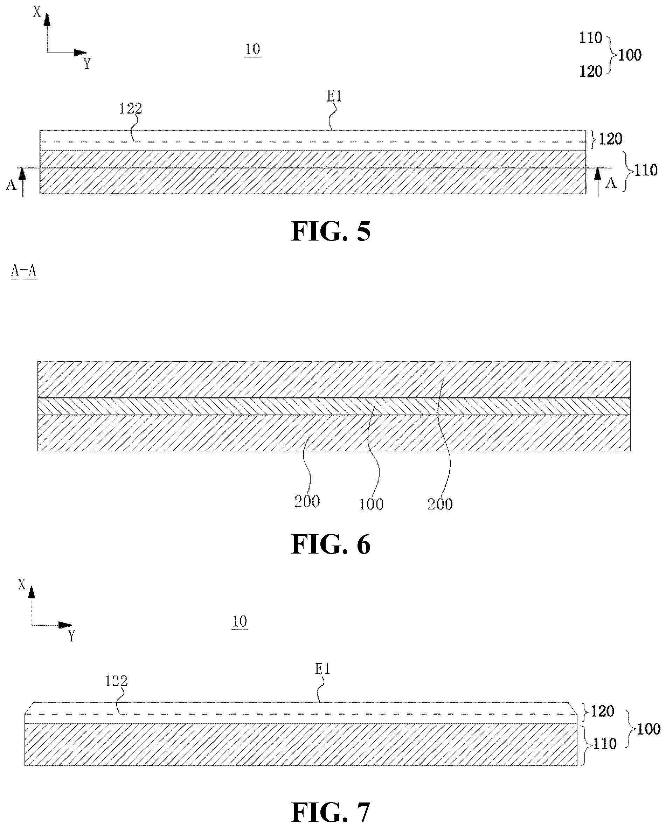

Referring to FIG. 5 and FIG. 6, FIG. 5 is a schematic structural view of an electrode plate provided in some embodiments of the present application. FIG. 6 is a schematic view of a cross-sectional structure taken along a direction A-A in FIG. 5.

Some embodiments of the present application provide an electrode plate 10, including a current collector 100 and an active material layer 200 coated on the surface of the current collector 100. The current collector 100 includes a coating region 110 coated with the active material layer 200, and a tab region 120 not coated with the active material layer 200. The tab region 120 is provided with a stress barrier structure 122 spaced apart from the coating region 110, and the stress barrier structure 122 is configured to reduce the stress transmitted to the junction of the tab region 120 and the coating region 110 when the tab region 120 is deformed.

The tab region 120 and the coating region 110 in the current collector 100 are disposed side by side, and the tab region 120 may be disposed on one side of the coating region 110 or on both sides of the coating region 110 simultaneously. The active material layer 200 is coated in the coating region 110, and there is no active material layer 200 in the tab region 120. In the process of forming the electrode assembly 12, it is usually necessary to perform the flipping treatment on the tab region 120 in the current collector 100, and during this process, the tab region 120 in the current collector 100 may be deformed.

The "deformation" mentioned in some embodiments of the present application not only includes the change in the shape and size of the tab region 120 in the current collector 100, but also includes the change in the angle of the tab region 120 in the current collector 100 relative to the coating region 110. The tab region 120 in the current collector 100 will be deformed under the action of stress, and the stress acting on the tab region 120 will also be transmitted in the tab region 120, which is easy to affect the coating region 110.

In order to reduce the impact of the stress on the coating region 110, in some embodiments of the present application, a stress barrier structure 122 is disposed in the tab region 120, and the stress barrier structure 122 can achieve a stress blocking effect to a certain extent, so that the stress transmitted to the stress barrier structure 122 is difficult to be transmitted to the other side of the stress barrier structure 122.

When the tab region 120 is deformed, the stress will be gradually transmitted from the side of the tab region 120 away from the coating region 110 to the direction close to the coating region 110. During this process, the stress needs to first pass through the stress barrier structure 122 and then reaches the coating region 110. The presence of the stress barrier structure 122 can reduce or even completely eliminate the stress.

Further, in some embodiments of the present application, the stress barrier structure 122 is spaced apart from the coating region 110, that is, there is a certain distance between the stress barrier structure 122 and the coating region 110. The structure between the stress barrier structure 122 and the coating region 110 can further reduce the stress transmitted to the coating region 110 to ensure that the stress that can be transmitted to the junction of the tab region 120 and the coating region 110 is within an allowable range, thereby reducing the risk of cracking or wrinkling in the coating region 110 in the current collector 100, also reducing the risk of falling off of the active material layer 200 coated on the coating region 110, and increasing the product yield.

The specific structure of the stress barrier structure 122 is not limited in some embodiments of the present application, as long as the stress barrier structure 122 can achieve a stress blocking effect to a certain extent. Moreover, the shape and contour of the stress barrier structure 122 are also not limited in some embodiments of the present application. Exemplarily, the stress barrier structure 122 can extend along the direction parallel to the junction of the tab region 120 and the coating region 110, or can intersect with the direction of the junction. In addition, one or a plurality of stress barrier structures 122 may be provided. When a plurality of stress barrier structures 122 are provided, the plurality of stress barrier structures 122 are disposed side by side to block the stress at different positions.

In some embodiments of the present application, the stress barrier structure 122 is disposed in the tab region 120, and the stress barrier structure 122 is spaced apart from the coating region 110, thereby reducing the stress transmitted to the junction of the tab region 120 and the coating region 110 when the tab region 120 is deformed, reducing the risk of cracking or wrinkling in the coating region 110 in the current collector 100, reducing the risk of falling off of the active material layer 200 on the coating region 110, and increasing the product yield.

In some embodiments, as shown in FIG. 5, the stress barrier structure 122 includes at least one of a groove and a score.

The presence of the structure such as the groove or the score can weaken the strength of the stress barrier structure 122 compared to other structures, that is, the stress barrier structure 122 can withstand less maximum stress compared to other positions in the tab region 120, and is more prone to deformation. Therefore, when subjected to stress, the position of the stress barrier structure 122 is more prone to flipping compared to other positions in the tab region 120.

In related technologies, the flipping position usually occurs at the junction of the tab region 120 and the coating region 110, which causes that the deformation of the tab region 120 easily generates the adverse impact on the coating region 110. In some embodiments of the present application, since the stress barrier structure includes at least one of the groove and the score, compared to other positions in the tab region 120, the position of the stress barrier structure 122 is more prone to flipping. That is, there is a certain distance between the flipping position and the coating region 110, thereby reducing the impact of deformation of the tab region 120 on the coating region 110.

In some other embodiments, the current collector 100 includes a first part and a second part located in the tab region 120 and on both sides of the stress barrier structure 122 in a first direction X, the structural strength of the stress barrier structure 122 is lower than the structural strength of at least one of the first part and the second part, and the tab region 120 is located on one side of the coating region 110 along the first direction X.

The tab region 120 and the coating region 110 are disposed side by side in the first direction X, and the stress barrier structure 122 is spaced apart from the coating region 110 in the first direction X. The first part and the second part are respectively located on both sides of the stress barrier structure 122 in the first direction X. The first part and the second part may be disposed adjacent to the stress barrier structure 122, or there may be a certain distance between the first part and the second part and the stress barrier structure 122 in the first direction X, which is not limited in some embodiments of the present application, as long as the first part and the second part are both located in the tab region 120 and the first part and the second part are located on both sides of the stress barrier structure 122 in the first direction X.

The "structural strength of the stress barrier structure 122" mentioned in some embodiments of the present application refers to the magnitude of the stress that can cause deformation of the stress barrier structure 122. Similarly, the structural strength of the first part and the second part refers to the magnitude of the stress that can cause deformation of the first part and the second part. In general, there is a positive correlation between the structural strength and the deformation resistance, that is, the higher the material strength, the stronger the deformation resistance. Exemplarily, the structural strength of the stress barrier structure 122 can be reduced by processes such as thinning.

Similar to the above embodiment, in some embodiments of the present application, since the structural strength of the stress barrier structure 122 is lower than the structural strength of at least one of the first part and the second part, compared to the first part and the second part, the position of the stress barrier structure 122 is more prone to flipping. That is, there is a certain distance between the flipping position and the coating region 110, thereby reducing the impact of deformation of the tab region 120 on the coating region 110.

In some embodiments, the tab region 120 has a first edge E1 on the side away from the coating region 110, the first edge E1 extends along a second direction Y, the first direction X intersects with the second direction Y, and the stress barrier structure 122 is disposed parallel to the first edge E1.

As shown in FIG. 5, the first edge E1 is located on the side of the tab region 120 away from the coating region 110 in the first direction X, and the first edge E1 extends along the second direction Y. Exemplarily, the first direction X is perpendicular to the second direction Y. The junction of the tab region 120 and the coating region 110 may also extend along the second direction Y, that is, the first edge E1 may be disposed parallel to the junction of the tab region 120 and the coating region 110.

The stress barrier structure 122 is disposed parallel to the first edge E1, indicating that the stress barrier structure 122 also extends along the second direction Y. The length relationship between the stress barrier structure 122 and the first edge E1 in the second direction Y is not limited in some embodiments of the present application. Exemplarily, the length of the stress barrier structure 122 in the second direction Y may be greater than, less than, or equal to the length of the first edge E1 in the second direction Y.

The stress is usually transmitted from the vicinity of the first edge E1 to the direction close to the coating region 110. In some embodiments of the present application, the stress barrier structure 122 is disposed parallel to the first edge E1, and then, the stress barrier structure 122 can better block the stress near the position of the first edge E1, thereby further reducing the impact of deformation of the tab region 120 on the coating region 110, and increasing the product yield.

In some embodiments, the length of the stress barrier structure 122 in the second direction Y is not less than the length of the first edge E1 in the second direction Y

The length of the stress barrier structure 122 in the second direction Y may be greater than or equal to the length of the first edge E1 in the second direction Y Similarly, the length of the stress barrier structure 122 in the second direction Y may also be greater than or equal to the length of the junction of the tab region 120 and the coating region 110 in the second direction Y

In the implementation of the present application, the length of the stress barrier structure 122 in the second direction Y is set to be not less than the length of the first edge E1 in the second direction Y, thereby further increasing the blocking effect of the stress barrier structure 122 on the stress near the position of the first edge E1, and further reducing the impact of deformation of the tab region 120 on the coating region 110.

In some optional embodiments, as shown in FIG. 7, the size of the stress barrier structure 122 in the second direction Y is greater than the size of the first edge E1 in the second direction Y, and the stress barrier structure 122 exceeds both ends of the first edge E1 in the second direction Y

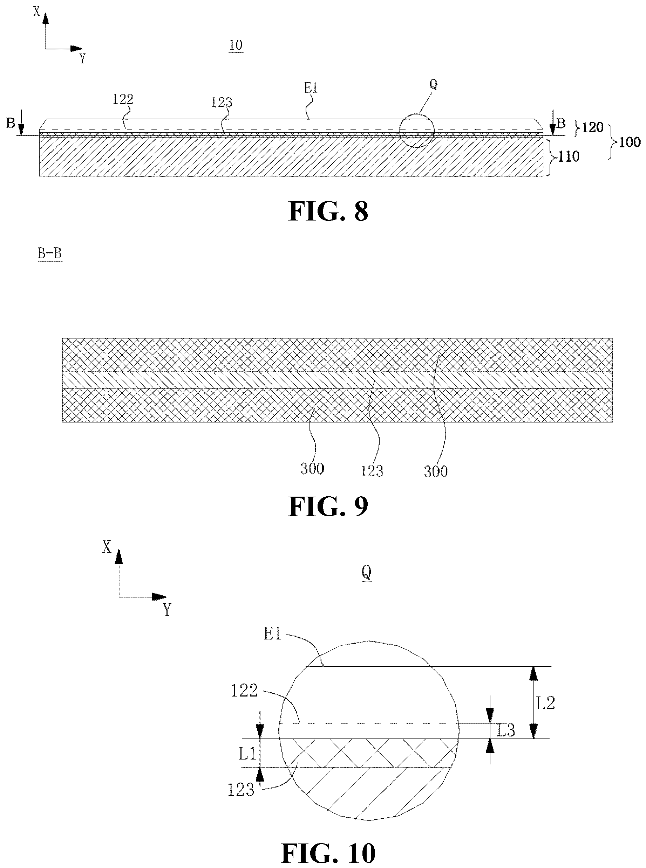

In some embodiments, referring to FIG. 8, the current collector 100 includes a strengthening part 123, and the strengthening part 123 is disposed in the tab region 120 and located on the side of the stress barrier structure 122 facing the coating region 110. The structural strength of the strengthening part 123 is not less than the structural strength of other positions in the tab region 120.

The strengthening part 123 is located between the stress barrier structure 122 and the coating region 110 in the first direction X. The strengthening part 123 may be located in parts of regions between the stress barrier structure 122 and the coating region 110, or in all regions between the strengthening part 123 and the stress barrier structure 122. That is, the strengthening part 123 may be disposed adjacent to the coating region 110 and the stress barrier structure 122 in the first direction X, or spaced apart from the coating region 110 and the stress barrier structure 122 in the first direction X.

The structural strength of the strengthening part 123 is not less than the structural strength of other positions in the tab region 120. The "structural strength" mentioned in some embodiments of the present application refers to the magnitude of the stress that the strengthening part 123 can withstand when the tab region 120 is deformed. Compared to other positions in the tab region 120, the strengthening part 123 can have higher structural strength. Higher structural strength usually means an increase in the difficulty of stress transmission, so the disposition of the strengthening part 123 can reduce the magnitude of the stress transmitted to the coating region 110. The specific size and material of the strengthening part 123 are not limited in some embodiments of the present application.

In some embodiments of the present application, the strengthening part 123 is located between the stress barrier structure 122 and the coating region 110, and the structural strength of the strengthening part 123 is not less than the structural strength of other positions in the tab region 120. As a result, in the process of transmitting the stress to the coating region 110, the stress barrier structure 122 first achieves a blocking effect on the stress, and then, the strengthening part 123 will further reduce the stress transmitted to the coating region 110, thereby achieving a dual blocking effect on the stress, and further reducing the risk of wrinkling or cracking in the coating region 110.

In some embodiments, the thickness of the strengthening part 123 is greater than the thickness of other positions in the tab region 120.

In general, there is a positive correlation between the thickness and the structural strength, that is, the greater the thickness, the higher the structural strength. On this basis, in some embodiments of the present application, the thickness of the strengthening part 123 is increased to be greater than the thickness of other positions in the tab region 120, thereby increasing the structural strength of the strengthening part 123 to better achieve an effect on blocking stress transmission.

It should be noted that in some embodiments of the present application, the thicknesses of all regions in the strengthening part 123 may be increased, or the thicknesses of parts of regions in the strengthening part 123 may be increased. Exemplarily, the thickness of the region close to the coating region 110 in the strengthening part 123 may be increased only, or the thickness of the region close to the stress barrier structure 122 in the strengthening part 123 may be increased only.

In some other embodiments, the hardness of the strengthening part 123 is greater than the hardness of other parts in the tab region 120.

In addition to adjusting the thickness of the strengthening part 123 to achieve higher structural strength of the strengthening part 123, it is also possible to increase the hardness of the strengthening part 123 to achieve higher structural strength of the strengthening part 123. It should be noted that the increase in hardness of the strengthening part 123 may be achieved by changing the material of the strengthening part 123, that is, adding a material with a larger hardness parameter in the strengthening part 123, and the change in hardness may be achieved through process methods. Specifically, the surface properties of the strengthening part 123 may be changed through annealing, electroplating, oxidation, and other means, so that the strengthening part 123 has higher hardness.

In some embodiments of the present application, by changing the thickness of the strengthening part 123 or changing the hardness of the strengthening part 123, the strengthening part 123 has higher structural strength, thereby better achieving the stress blocking effect. Moreover, compared with other methods, it is easier to implement and does not require too many complicated process links.

In some embodiments, referring to FIG. 8 and FIG. 9, the electrode plate 10 further includes a strengthening layer 300, and the strengthening layer 300 is an inactive material layer coated on the strengthening part 123.

The strengthening layer 300 is coated on the strengthening part 123, which can increase the overall thickness of the electrode plate 10 at this position. The presence of the strengthening layer 300 can further achieve the stress blocking effect. The strengthening layer 300 may completely cover the strengthening part 123, or only cover parts of regions in the strengthening part 123. Exemplarily, the strengthening part 123 may be disposed in the region close to the coating region 110 in the strengthening part 123, or the strengthening part 123 may also be disposed in region close to the stress barrier structure 122 in the strengthening part 123.

The strengthening layer 300 is an inactive material layer, so the strengthening layer 300 does not participate in the transmission of electrical signals. The thickness of the strengthening layer 300 may be the same as or different from the thickness of the active material layer 200.

In some embodiments of the present application, similar to the strengthening part 123, the strengthening layer 300 can also achieve stress absorbing and blocking effects, thereby further reducing the magnitude of the stress transmitted to the coating region 110, reducing the risk of wrinkling or cracking in the coating region 110, and increasing the product yield.

In some embodiments, referring to FIG. 8 and FIG. 10, the strengthening part 123 is spaced apart from the stress barrier structure 122 in the first direction X, that is, there is a distance between the strengthening part 123 and the stress barrier structure 122. The distance between the strengthening part 123 and the stress barrier structure 122 is not limited in some embodiments of the present application.

In some embodiments of the present application, by spacing the strengthening part 123 apart from the stress barrier structure 122, the stress at the stress barrier structure 122 is more difficult to be transmitted to the position of the strengthening part 123, so the stress is more difficult to be transmitted to the position of the coating region 110, so as to reduce the risk of wrinkling or cracking in the coating region 110.

In some embodiments, as shown in FIG. 8 and FIG. 10, the length of the strengthening part 123 in the first direction X is L1, the minimum distance between the first edge E1 and the strengthening part 123 is L2, and L1 and L2 meet: L2 ≥ L1.

From the above content, it can be seen that the presence of the strengthening part 123 can increase the stress blocking effect and reduce the impact of deformation of the tab region 120 on the coating region 110. In general, due to higher structural strength of the strengthening part 123, the strengthening part 123 is not prone to deformation. The region between the strengthening part 123 and the first edge E1 is prone to deformation due to lower strength.

It should be noted that although the flipping position is usually located at the position of the stress barrier structure 122, the structure between the stress barrier structure 122 and the first edge E1 as well as the structure between the stress barrier structure 122 and the strengthening part 123 will also experience wrinkling deformation under the influence of stress and other factors.

On this basis, if the strengthening part 123 occupies too much space, it will result in too little space for deformation in the tab region 120, therefore, it is not conducive to the welding effect between the tab region 120 and a current collecting plate in the subsequent production process of the battery cell, as well as the overcurrent effect of the electrode plate 10 during use.

Therefore, in some embodiments of the present application, the length L1 of the strengthening part 123 in the first direction X is set to be not greater than the minimum distance L2 between the first edge E1 and the strengthening part 123, thereby not only reducing the occurrence of wrinkling and cracking in the coating region 110, but also ensuring sufficient space in the tab region 120 to achieve a deformation function to ensure the reliability of subsequent production and use of battery cells. Exemplarily, L1 meets: 1 mm ≤ L1 ≤ 4 mm; and L2 meets: 4 mm ≤ L2 ≤ 10 mm.

In some embodiments, as shown in FIG. 8 and FIG. 10, the minimum distance between the strengthening part 123 and the stress barrier structure 122 in the first direction X is L3, where L1 and L3 meet: L1 ≥ L3.

Due to the blocking of the stress barrier structure 122, the deformation quantity between the stress barrier structure 122 and the first edge E1 is usually greater than the deformation quantity between the stress barrier structure 122 and the strengthening part 123, that is, the deformation quantity of the region between the stress barrier structure 122 and the strengthening part 123 is usually smaller.

If the region space between the stress barrier structure 122 and the strengthening part 123 is too large, it will cause the size of the strengthening part 123 to decrease, thus affecting the blocking effect of the strengthening part 123 on stress. Moreover, the deformation quantity of the region between the stress barrier structure 122 and the strengthening part 123 has little impact on the overall deformation quantity of the tab region 120. Even if the space increases, it will not have too much impact on the subsequent production and use of battery cells.

Therefore, in some embodiments of the present application, the minimum distance L3 between the strengthening part 123 and the stress barrier structure 122 in the first direction X is set to be not greater than the length L1 of the strengthening part 123 in the first direction X, so more regions in the tab region 120 can be used for forming the strengthening part 123, so as to further reduce the risk of wrinkling and cracking in the coating region 110.

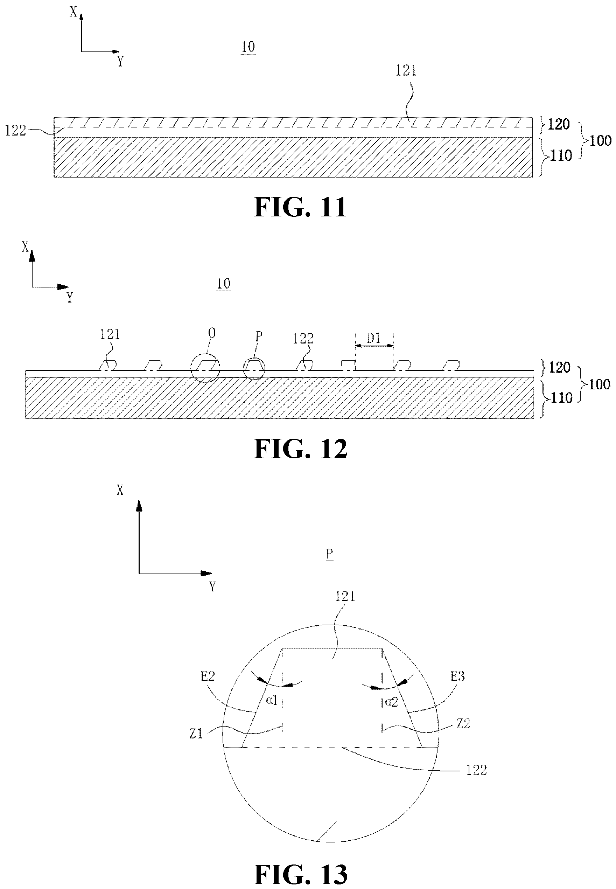

In some embodiments, referring to FIG. 11 and FIG. 12, the current collector 100 includes a plurality of tab parts 121 disposed in the tab region 120, and the plurality of tab parts 121 are disposed side by side along the second direction Y A plurality of stress barrier structures 122 are provided, and the plurality of stress barrier structures 122 are respectively disposed on the plurality of tab parts 121.

The tab parts 121 in the tab region 120 are disposed side by side along the second direction Y, and the tab parts 121 are a plurality of independent structures. The edges of adjacent tab parts 121 in the second direction Y may be connected to each other, or there may be a certain gap between the edges of adjacent tab parts 121 in the second direction Y.

The shape and size of the tab part 121 are not limited in some embodiments of the present application. Moreover, the shapes and sizes of the tab parts 121 may be the same or different. Exemplarily, the inclination directions of the tab parts 121 are similar, or the shapes of the tab parts 121 are similar polygons.

The number of the stress barrier structures 122 is the same as the number of the tab parts 121. The plurality of stress barrier structures 122 are disposed side by side along the second direction Y and are respectively disposed on the corresponding tab parts 121. During the deformation process of the tab region 120, each tab part 121 needs to be flipped and deformed respectively, so each tab part 121 will be subjected to stress. Moreover, the stress on each tab part 121 may be transmitted to the coating region 110, thereby affecting the coating region 110.

On this basis, in some embodiments of the present application, the stress barrier structures 122 are in one-to-one correspondence with the tab parts 121, so the plurality of stress barrier structures 122 can achieve stress blocking effects on the plurality of tab parts 121, so as to reduce the magnitude of the stress transmitted to the coating region 110, and reduce the risk of wrinkling or cracking in the coating region 110.

In some embodiments, referring to FIG. 13, the tab part 121 has a second edge E2 and a third edge E3 opposite to each other in the second direction Y, and the second edge E2 is obliquely disposed relative to the first direction X.

The second edge E2 is obliquely disposed relative to the first direction X, that is, the extension direction of the second edge E2 intersects with the first direction X. In some embodiments of the present application, the second edge E2 in the tab part 121 is obliquely disposed, so the tab part 121 can have a certain oblique trend. When the tab region 120 is deformed, the tab part 121 can be flipped along the extension direction of the second edge E2, thereby simplifying the flipping difficulty of the tab part 121.

It should be noted that the relationship between the third edge E3 and the first direction X is not limited in some embodiments of the present application. The third edge E3 may be disposed parallel to the first direction X, or may be obliquely disposed relative to the first direction X.

In some embodiments, a first ray Z1 parallel to the first direction X is formed in the direction from the tab region 120 to the coating region 110, the first ray Z1 takes the end of the second edge E2 away from the coating region 110 as an end point, an included angle between the second edge E2 and the first ray Z1 is α1, and α1 meets: -75° ≤ α1 ≤ 75°.

Assuming that the second edge E2 is located within the 180° clockwise rotation range of the first ray Z1, the included angle α1 between the second edge E2 and the first ray Z1 is a positive included angle; and assuming that the second edge E2 is located within the 180° counterclockwise rotation range of the first ray Z1, the included angle α1 between the second edge E2 and the first ray Z1 is a negative included angle.

In this embodiment, detailed description will be given taking FIG. 13 as an example. In FIG. 13, the second edge E2 is completely located on the left side of the first ray Z1, and the second edge E2 is located within the 180° counterclockwise rotation range of the first ray Z1 around its end point, so the included angle α1 between the second edge E2 and the first ray Z1 is a negative included angle. Exemplarily, in FIG. 13, α1 = -30°.

It should be noted that since the second edge E2 is obliquely disposed relative to the first direction X, and the first ray Z1 is parallel to the first direction X, the included angle α1 between the second edge E2 and the first ray Z1 cannot be 0.

The included angle α1 between the second edge E2 and the first ray Z1 is an inclination angle of the second edge E2, where the larger the inclination angle of the second edge E2, the larger the inclination angle of the tab part 121, and the lower the difficulty of flipping deformation of the tab part 121. If the inclination angle of the second edge E2 is too large, the length of the tab part 121 in the first direction X will decrease accordingly, which will increase the difficulty of connecting the tab part 121 after flipping with other components, and reduce the overcurrent area of the tab part 121. Therefore, in some embodiments of the present application, the included angle α1 between the second edge E2 and the first direction X is limited to -75° ≤ α1 ≤ 75°, so as to balance the flipping difficulty and overcurrent area of the tab part 121. Optionally, the angle α1 meets: -30° ≤ α1 ≤ 30°.

In some embodiments, as shown in FIG. 13, the third edge E3 is obliquely disposed relative to the first direction X.

The third edge E3 is obliquely disposed relative to the first direction X, that is, the extension direction of the third edge E3 intersects with the first direction X. The inclination directions of the second edge E2 and the third edge E3 relative to the first direction X may be the same or different. Exemplarily, a second ray Z2 parallel to the first direction X is formed in the direction from the tab region 120 to the coating region 110, the second ray Z2 takes the end of the third edge E3 away from the coating region 110 as an end point, and an included angle between the third edge E3 and the second ray Z2 is α2.

Similar to the included angle α1, assuming that the third edge E3 is located within the 180° clockwise rotation range of the second ray Z2, the included angle α2 between the third edge E3 and the second ray Z2 is a positive included angle; and assuming that the third edge E3 is located within the 180° counterclockwise rotation range of the second ray Z2, the included angle α1 between the third edge E3 and the second ray Z2 is a negative included angle.

In this embodiment, detailed description will be given taking FIG. 13 as an example. In FIG. 13, the third edge E3 is completely located on the right side of the second ray Z2, and the third edge E3 is located within the 180° clockwise rotation range of the second ray Z2 around its end point, so the included angle α2 between the third edge E3 and the second ray Z2 is a positive included angle.

It should be noted that since the third edge E3 is obliquely disposed relative to the first direction X, and the second ray Z2 is parallel to the first direction X, the included angle α1 between the second edge E3 and the second ray Z2 cannot be 0.

In some embodiments of the present application, two edges along the second direction Y in the tab part 121 are both obliquely disposed, so that when a plurality of electrode assemblies are integrated into a tab, the tab parts 121 can be nested with each other to increase the overcurrent capacity.

In some embodiments, as shown in FIG. 13, α1 and α2 meet: α1 + α2 = 0°. That is, the inclination directions of the second edge E2 and the third edge E3 are different.

Specifically, when the included angle α1 is a positive angle, the included angle α2 is a negative angle with the same angle value. Exemplarily, when the value of α1 is 30°, the value of α2 is -30°; when the value of α1 is 45°, the value of α2 is -45°; and when the value of α1 is 50°, the value of α2 is -50°.

In this design, the contour shape of the tab part 121 is an isosceles trapezoid structure, and the isosceles trapezoid structure often implies stronger stability, so that the tab part 121 can have higher structural strength, and the distance between adjacent tab parts 121 can also be increased to facilitate the flipping of the tab part 121.

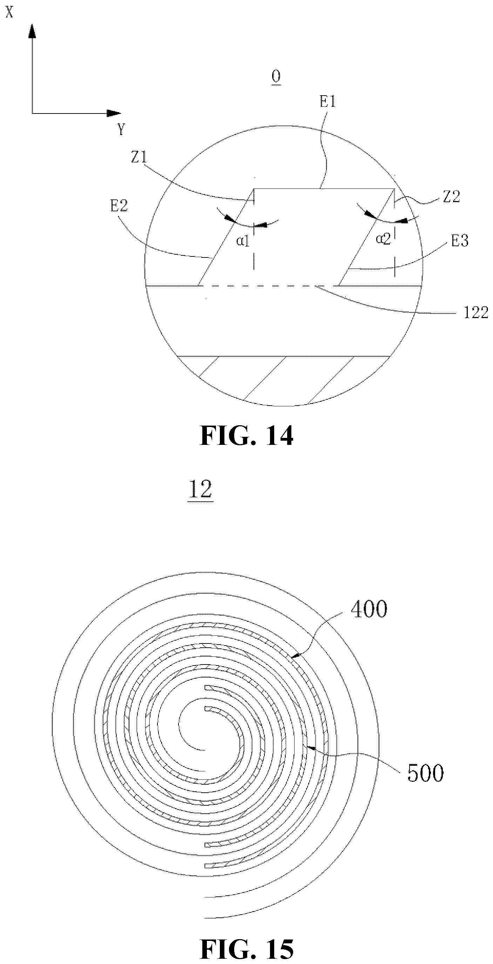

In some embodiments, as shown in FIG. 14, α1 and α2 meet: α1 = α2. That is, the second edge E2 and the third edge E3 have the same inclination direction.

Specifically, when the included angle α1 is a positive angle, the included angle α2 is a positive angle with the same angle value. Exemplarily, when the value of the α1 is 30°, the value of the α2 is 30°; when the value of the α1 is 45°, the value of the α2 is 45°; and when the value of the α1 is 50°, the value of the α2 is 50°.

In this design, the contour shape of the tab part 121 is a parallelogram structure, and the second edge E2 and the third edge E3 have the same inclination direction, so that the entire tab part 121 has the trend to incline to the same direction. As a result, in the flipping process, a plurality of tab parts 121 can be flattened according to the same direction, thereby reducing the possibility of wrinkling caused by multi-direction flattening.

In some optional embodiments, during the formation of the electrode assembly 12, the inclination direction of the tab part 121 is the same as the winding direction of the current collector 100. By this design, the tab part 121 can be flipped and flattened along the winding direction in the winding process or after the winding is completed, thereby further reducing the stress impact on the coating region 110 caused by flipping of the tab part 121.

In some embodiments, as shown in FIG. 2, the minimum distance between adjacent tab parts 121 in the second direction Y is D1, and D1 meets: 0 ≤ D1 ≤ 1000 mm.

When the D1 is equal to 0, it indicates that the edges of adjacent tab parts 121 are connected to each other. Further, in two adjacent tab parts 121, the second edge E2 of one tab part 121 is connected to the third edge E3 of the other tab part 121. When the D1 > 0, it indicates that there is a gap between adjacent tab parts 121.

If the minimum distance D1 between adjacent tab parts 121 is larger, the number of the tab parts 121 in the electrode plate 10 is smaller, and after the subsequent formation of battery cells, the efficiency of the current that can be transmitted by the tab part 121 electrically connected to other components is lower.

Therefore, in some embodiments of the present application, the minimum distance D1 between adjacent tab parts 121 is set to be 0 ≤ D1 ≤ 1000 mm, and the minimum distance between adjacent tab parts 121 is increased as much as possible on the premise of ensuring the overcurrent efficiency of the tab part 121 to reduce the overall weight of the electrode plate 10. Optionally, the D1 is one of 0, 10 mm, 100 mm, 500 mm, and 1000 mm.

In some embodiments, as shown in FIG. 12 and FIG. 14, any of the tab parts 121 does not exceed the coating region 110 in the second direction Y, that is, the first edge E1, the second edge E2, and the third edge E3 in any of the tab parts 121 do not exceed the coating region 110 in the second direction Y.

If the tab part 121 exceeds the coating region 110 in the second direction Y, in the winding process, the tab part 121 may partially exceed a winding structure, which may easily cause physical interference with other components and affect the normal use of subsequently formed battery cells.

In some embodiments of the present application, by setting the tab part 121 to not exceed the coating region 110 in the second direction Y, in the winding process, the risk of the tab part 121 exceeding a winding structure can be reduced, and the structural reliability can be increased.

In a second aspect, referring to FIG. 15, some embodiments of the present application provide an electrode assembly 12, including a first electrode plate 400 and a second electrode plate 500 with opposite polarities. The first electrode plate 400 and/or the second electrode plate 500 are the electrode plate according to any of the above embodiments.

It should be noted that the electrode assembly 12 provided in some embodiments of the present application has the beneficial effects of the electrode plate according to any of the above embodiments. Specific details refer to the description of the beneficial effects of the electrode plate mentioned above, and will not be repeated in some embodiments of the present application.

In some embodiments, referring to FIG. 10 and FIG. 15, both the first electrode plate 400 and the second electrode plate 500 are the electrode plate according to any of the above embodiments, the first electrode plate 400 is an anode electrode plate, and the second electrode plate 500 is a cathode electrode plate, where the L3 corresponding to the second electrode plate 500 is not less than the L3 corresponding to the first electrode plate 400.

In some embodiments of the present application, the L3 of the second electrode plate 500 is set to be not less than the L3 of the first electrode plate 400, that is, the size of the strengthening part 123 in the second electrode plate 500 can be larger than the size of the strengthening part 123 in the first electrode plate 400, so that the strengthening part 123 in the second electrode plate 500 can not only reduce the magnitude of the stress on the coating region in the second electrode plate 500, but also achieve protecting and fixing effects on the strengthening part 123 in the first electrode plate 400 to increase the overall reliability of the electrode assembly 12.

In a third aspect, some embodiments of the present application provide a battery cell, including a shell and an electrode assembly according to any of the above embodiments, and the electrode assembly is disposed in the shell.

It should be noted that the battery cell provided in some embodiments of the present application has the beneficial effects of the electrode assembly according to any of the above embodiments. Specific details refer to the description of the beneficial effects of the electrode plate and the electrode assembly mentioned above, and will not be repeated in some embodiments of the present application.

In some embodiments, referring to FIG. 4, FIG. 8 and FIG. 10, the battery cell is cylindrical, the current collector 100 includes a strengthening part 123, and the strengthening part 123 is disposed in the tab region 120 and located on the side of the stress barrier structure 122 facing the coating region 110. The tab region 120 has a first edge E1 on the side away from the coating region 110, the minimum distance between the first edge E1 and the strengthening part 123 is L2, the diameter of the battery cell is L4, and L2 and L4 meet: L2 ≤ 2*L4.

If the tab part 121 is too high, it will cause mutual interference of a plurality of tabs located in relative positions in the flipping process. Therefore, in some embodiments of the present application, according to the size of the battery cell, the L2 is set to be not greater than 2L4 to meet the production need of the battery cell.

In a fourth aspect, some embodiments of the present application provide a battery, including the battery cell according to any of the above embodiments.

In a fifth aspect, some embodiments of the present application provide an electrical apparatus, including the battery cell according to any of the embodiments, and the battery cell is configured to provide electric energy.

In some embodiments, referring to FIG. 5 to FIG. 10, FIG. 12 and FIG. 14, the present application provides an electrode plate 10. The electrode plate 10 includes a current collector 100 and an active material layer 200 coated on the surface of the current collector 100. The tab region 120 is provided with a stress barrier structure 122 spaced apart from the coating region 110, and the stress barrier structure 122 is configured to reduce the stress transmitted to the junction of the tab region 120 and the coating region 110 when the tab region 120 is deformed. The stress barrier structure 122 includes at least one of a groove and a score. The tab region 120 has a first edge E1 on the side away from the coating region 110, the first edge E1 extends along a second direction Y, the stress barrier structure 122 is disposed parallel to the first edge E1, and the length of the stress barrier structure 122 in the second direction Y is not less than the length of the first edge E1 in the second direction Y.

The current collector 100 further includes a strengthening part 123, the strengthening part 123 is located in the tab region 120 and located on the side of the stress barrier structure 122 facing the coating region 110, and the structural strength of the strengthening part 123 is not less than the structural strength of other positions in the tab region 120. The electrode plate 10 further includes a strengthening layer 300, and the strengthening layer 300 is an inactive material layer coated on the strengthening part 123. The strengthening part 123 and the stress barrier structure 122 are disposed in the first direction X, and the tab region 120 is located on one side of the coating region 110 along the first direction X.

The current collector 100 includes a plurality of tab parts 121 disposed in the tab region 120, and the plurality of tab parts 121 are disposed side by side along the second direction Y A plurality of stress barrier structures 122 are provided, and the plurality of stress barrier structures 122 are respectively disposed on the plurality of tab parts 121. The tab part 121 has a second edge E2 and a third edge E3 opposite to each other in the second direction Y, and the second edge E2 and the third edge E3 are obliquely disposed relative to the first direction X and have the same inclination direction.

It should be noted that in the case of no conflict, the embodiments in the present application and the features in the embodiments may be combined with each other.

Finally, it should be noted that the above embodiments are merely used for illustrating rather than limiting the technical solutions of the present application. Although the present application is described in detail with reference to the above embodiments, those of ordinary skill in the art should understand that the technical solutions recorded in the above embodiments can still be modified, or some of the technical features therein can be equivalently substituted. However, such modifications or substitutions do not make the essence of the corresponding technical solutions depart from the spirit and scope of the technical solutions of the embodiments of the present application.

## Claims

1. An electrode plate, comprising a current collector and an active material layer coated on a surface of the current collector, wherein:
the current collector comprises a coating region coated with the active material layer and a tab region not coated with the active material layer; and
the tab region is provided with a stress barrier structure spaced apart from the coating region, and the stress barrier structure is configured to reduce stress transmitted to a junction of the tab region and the coating region when the tab region is deformed.

2. The electrode plate according to claim 1, wherein:
the stress barrier structure comprises at least one of a groove and a score; and/or
the current collector comprises a first part and a second part located in the tab region and on two sides of the stress barrier structure in a first direction, wherein structural strength of the stress barrier structure is lower than structural strength of at least one of the first part and the second part, and the tab region is located on one side of the coating region along the first direction.

3. The electrode plate according to claim 1 or 2, wherein:
the tab region has a first edge on a side thereof away from the coating region, the first edge extends along a second direction, the tab region is located on one side of the coating region along the first direction, and the first direction intersects with the second direction; and
the stress barrier structure is disposed parallel to the first edge.

4. The electrode plate according to claim 3, wherein a length of the stress barrier structure in the second direction is not less than a length of the first edge in the second direction.

5. The electrode plate according to any one of claims 1 to 5, wherein the current collector comprises a strengthening part, wherein:
the strengthening part is disposed in the tab region and located on a side of the stress barrier structure facing the coating region; and
structural strength of the strengthening part is not less than structural strength of other positions in the tab region.

6. The electrode plate according to claim 4, wherein:
a thickness of the strengthening part is greater than a thickness of other positions in the tab region; and/or
hardness of the strengthening part is greater than hardness of other parts in the tab region.

7. The electrode plate according to claim 5 or 6, further comprising a strengthening layer, and the strengthening layer is an inactive material layer coated on the strengthening part.

8. The electrode plate according to any one of claims 5 to 7, wherein the strengthening part is spaced apart from the stress barrier structure in the first direction, and the tab region is located on one side of the coating region along the first direction.

9. The electrode plate according to any one of claim 8, wherein:
the tab region has a first edge on a side thereof away from the coating region;
a length of the strengthening part in the first direction is L1, and a minimum distance between the first edge and the strengthening part is L2; and
the tab region is located on one side of the coating region along the first direction,
wherein L1 and L2 meet: L2 ≥ L1.

10. The electrode plate according to claim 8 or 9, wherein:
a length of the strengthening part in the first direction is L1, and a minimum distance between the strengthening part and the stress barrier structure in the first direction is L3; and
the tab region is located on one side of the coating region along the first direction,
wherein L1 and L3 meet: L1 ≥ L3.

11. The electrode plate according to any one of claims 1 to 10, wherein:
the current collector comprises a plurality of tab parts disposed in the tab region, and the plurality of tab parts are disposed side by side along the second direction; and
a plurality of stress barrier structures are provided, and the plurality of stress barrier structures are respectively disposed on the plurality of tab parts.

12. The electrode plate according to claim 11, wherein the tab part has a second edge and a third edge opposite each other in the second direction, wherein the second edge is obliquely disposed relative to the first direction, and the tab region is located on one side of the coating region along the first direction.

13. The electrode plate according to claim 12, wherein a first ray parallel to the first direction is formed in a direction from the tab region to the coating region, wherein the first ray has an end point that is an end of the second edge away from the coating region, an included angle between the second edge and the first ray is α1, and α1 meet: -75° ≤ α1 ≤ 75°,
wherein in the case that the second edge is located within a 180° clockwise rotation range of the first ray, the included angle α1 between the second edge and the first ray is a positive included angle, and in the case that the second edge is located within a 180° counterclockwise rotation range of the first ray, the included angle α1 between the second edge and the first ray is a negative included angle.

14. The electrode plate according to any one of claims 11 to 13, wherein the third edge is obliquely disposed relative to the first direction.

15. The electrode plate according to claim 14, wherein:
a first ray parallel to the first direction is formed in a direction from the tab region to the coating region, wherein the first ray has an end point that is an end of the second edge away from the coating region, and an included angle between the second edge and the first ray is α1; and
a second ray parallel to the first direction is formed in the direction from the tab region to the coating region, wherein the second ray has an end point that is an end of the third edge away from the coating region, an included angle between the third edge and the second ray is α2, and α1 and α2 meet: α1 = α2, or α1 + α2 = 180°.

16. The electrode plate according to any one of claims 11 to 15, wherein a minimum distance between adjacent tab parts in the second direction is D1, and D1 meets: 0 ≤ D1 ≤ 1000 mm.

17. The electrode plate according to any one of claims 11 to 16, wherein none of the tab parts exceeds the coating region in the second direction.

18. An electrode assembly, comprising a first electrode plate and a second electrode plate with opposite polarities, wherein the first electrode plate and/or the second electrode plate are the electrode plate according to any one of claims 1 to 17.

19. The electrode assembly according to claim 18, wherein:
both the first electrode plate and the second electrode plate are the electrode plate according to any one of claims 1 to 17, wherein the first electrode plate is an anode electrode plate, and the second electrode plate is a cathode electrode plate; and
the current collector comprises a strengthening part, wherein the strengthening part is disposed in the tab region and located on a side of the stress barrier structure facing the coating region, and a size of the strengthening part is L3 in a direction from the tab region to the coating region,
wherein the size L3 of the strengthening part corresponding to the second electrode plate is not less than the size L3 of the strengthening part corresponding to the first electrode plate.

20. A battery cell, comprising a shell and the electrode assembly according to claim 18 or 19, wherein the electrode assembly is disposed in the shell.

21. The battery cell according to claim 20, wherein:
the battery cell is cylindrical;
the current collector comprises a strengthening part, and the strengthening part is disposed in the tab region and located on a side of the stress barrier structure facing the coating region; and
the tab region has a first edge on a side thereof away from the coating region, wherein a minimum distance between the first edge and the strengthening part is L2, a diameter of the battery cell is L4, and L2 and L4 meet: L2 ≤ 2*L4.

22. A battery, comprising the battery cell of claim 20 or 21.

23. An electrical apparatus, comprising the battery cell of claim 20 or 21, wherein the battery cell is configured to provide electric energy.
